# EUROPEAN PATENT SPECIFICATION

(11) **EP 3 480 152 B1**
(45) Date of publication and mention of the grant of the patent: **05.01.2022**
(21) Application number: 17200333.7
(22) Date of filing: 07.11.2017
(51) Int. Cl.: B66B 1/30, H02J 3/28, G05F 1/66

(54) **POWER MANAGEMENT OF A PASSENGER TRANSPORT SYSTEM**
LEISTUNGSVERWALTUNG FÜR EIN PERSONENBEFÖRDERUNGSSYSTEM
GESTION D'ÉNERGIE D'UN SYSTÈME DE TRANSPORT DE PASSAGERS

(43) Date of publication of application: 08.05.2019
(73) Proprietor: KONE Corporation, 00330 Helsinki (FI)
(72) Inventor: Raassina, Pasi, 00330 Helsinki (FI); Perunka, Pekka, 00330 Helsinki (FI)
(74) Representative: Papula Oy

(56) References cited:
- WO-A2-2008/135043
- US-A1- 2016 091 912
- US-A1- 2016 244 294

## Description

### BACKGROUND

In the power grid, the supply and demand of electricity must be in balance at all times. The transformation of energy systems towards more renewable and distributed energy production poses challenges for the electricity markets and for participating parties. Large quantities of weather-dependent intermittent renewable generation combined to the global trend on increasing electricity consumption hampers the task on maintaining the power grid balance. This has caused a shift towards more demand-based electricity tariffs, which penalize end-customers with highly volatile load profiles. At the same time, grid operators are forced to purchase more reserve for frequency regulation and demand response capacity to maintain the grid stability.

The power demand of existing elevator systems is extremely volatile. Short peaks in the power demand can be up to 30 times as high as the average demand resulting in significant transient peaks in the power demand of a building. On the other hand, the growing amount of renewable energy production and increasing overall grid demand put pressure on grid operators to have sufficient reserve capacity to maintain grid stability.

WO 2008/135043 A2 provides a solution to enable a current regeneration of energy consumers containing potential energy, such as lift systems or charging stations for electric vehicles having replaceable energy accumulators, in an autonomously or centrally controlled manner, or an additional energy extraction from electrical supply networks, in order to thereby temporarily provide regulating energy in the event of disturbances or peak loads in electrical supply networks, until other measures have an effect on the energy supplier or enable an additional charging of the supply network.

Therefore, new ways for maintaining the grid stability are constantly required. Thus, it would be beneficial to have a solution that would alleviate at least one of these drawbacks.

### SUMMARY

According to at least some of the aspects, a solution is provided that implements power management with a frequency-controlled energy system coupled to a passenger transportation system in a building, such as an elevator, an escalator, a conveyer or a multicar system with two or more self-propelled elevators in the same elevator shaft. The solution enables volatile loads to participate in maintaining the grid frequency, since the control is based on real-time grid frequency measurements.

According to a first aspect, there is provided a method for implementing power management of a passenger transport system comprising at least one passenger transport installation of a building. The method comprises obtaining real-time grid frequency information of the power grid; receiving, from an external control platform, a control request associated with the real-time grid frequency; and initiating power management of the passenger transport system based on the control request using at least one energy storage coupled to the least one passenger transport installation. The control request comprises a plurality of grid frequency thresholds and the method further comprises gradually effecting, based on the plurality of grid frequency thresholds, to what extent energy is fed to the power grid from the energy storage or taken from the power grid to the energy storage.

In an embodiment, the control request comprises a grid frequency threshold, wherein the method further comprises initiating feeding energy from the at least one energy storage when the real-time grid frequency falls below the grid frequency threshold.

In an embodiment, additionally, the method further comprises feeding energy from the at least one energy storage back to the grid.

In an embodiment, additionally, the method further comprises feeding energy from the at least one energy storage to the at least one passenger transport installation.

In an embodiment, additionally, the control request comprises a request to feed power from the at least one energy storage to the at least one passenger transport installation.

In an embodiment, additionally, the method further comprises determining the amount of power management performed in response to initiating the power management based on the control request, and reporting the amount of power management performed to the external control platform.

According to a second aspect, there is provided an apparatus for implementing power management of a passenger transport system comprising at least one passenger transport installation of a building. The apparatus comprises means for obtaining real-time grid frequency information of the power grid; means for receiving, from an external control platform, a control request associated with the real-time grid frequency; and means for initiating power management of the passenger transport system based on the control request using at least one energy storage coupled to the at least one passenger transport installation. The control request comprises a plurality of grid frequency thresholds and the apparatus further comprises means for gradually effecting, based on the plurality of grid frequency thresholds, to what extent energy is fed to the power grid from the energy storage or taken from the power grid to the energy storage.

In an embodiment, the control request comprises a grid frequency threshold, wherein the apparatus further comprises means for initiating feeding energy from the at least one energy storage when the real-time grid frequency falls below the grid frequency threshold.

In an embodiment, additionally, the apparatus comprises means for feeding energy from the at least one energy storage back to the grid.

In an embodiment, additionally, the apparatus comprises means for feeding energy from the at least one energy storage to the at least one passenger transport installation.

In an embodiment, additionally, the control request comprises a grid frequency threshold, wherein the apparatus further comprises means for initiating charging of the at least one energy storage from the power grid when the real-time grid frequency exceeds the grid frequency threshold.

In an embodiment, additionally, the control request comprises a request to feed power from the at least one energy storage to the at least one passenger transport installation.

In an embodiment, additionally, the apparatus comprises means for determining the amount of power management performed in response to initiating the power management based on the control request; and means for reporting the amount of power management performed to the external control platform.

According to a third aspect, there is provided an elevator system comprising at least one passenger transport installation; at least one energy storage; and an apparatus according to the second aspect.

In an embodiment, the elevator system is a multicar elevator system with two or more self-propelled elevator cars moving in the same shaft. Each car has a battery for providing electric power to drive the car and/or to provide electricity to the car electrification. In the shaft side there is provided a battery loading station, which charges each car battery when the car is positioned in a charging position near the loading station. The loading station may comprise the at least one energy storage as disclosed in the independent claims. This means that the at least one energy storage is charged from the mains electricity network, and is used as an energy buffer to rapidly charge the car batteries with high current.

According to a fourth aspect, there is provided a computer program comprising program code, which when executed by at least one processor of the apparatus according to the second aspect, causes the at least one processing unit to perform the method of the first aspect.

According to a fifth aspect, there is provided a computer readable medium comprising program code, which when executed by at least one processor of the apparatus according to the second aspect, causes the at least one processor to perform the method of any the first aspect.

The above discussed means may be implemented, for example, using at least one processor, at least one processor and at least one memory connected to the at least one processor, or at least one processor, at least one memory connected to the at least one processor and an input/output interface connected to the at least one processor.

### BRIEF DESCRIPTION OF THE DRAWINGS

The accompanying drawings, which are included to provide a further understanding of the invention and constitute a part of this specification, illustrate embodiments of the invention and together with the description help to explain the principles of the invention. In the drawings:
**FIG. 1** illustrates a block diagram of a passenger transport system comprising at least one passenger transport installation of a building according to an aspect
**FIG. 2A** illustrates a flow diagram of a method for implementing power management of a passenger transport system comprising at least one passenger transport installation of a building according to an aspect.
**FIG. 2B** illustrates a flow diagram of a method for implementing power management of a passenger transport system comprising at least one passenger transport installation of a building according to another aspect.
**FIG. 3** illustrates a system diagram depicting an apparatus according to an aspect.

### DETAILED DESCRIPTION

The following description illustrates a solution that aims to provide grid balancing services by managing power demand with a frequency-controlled energy system coupled to a passenger transport system of a building.

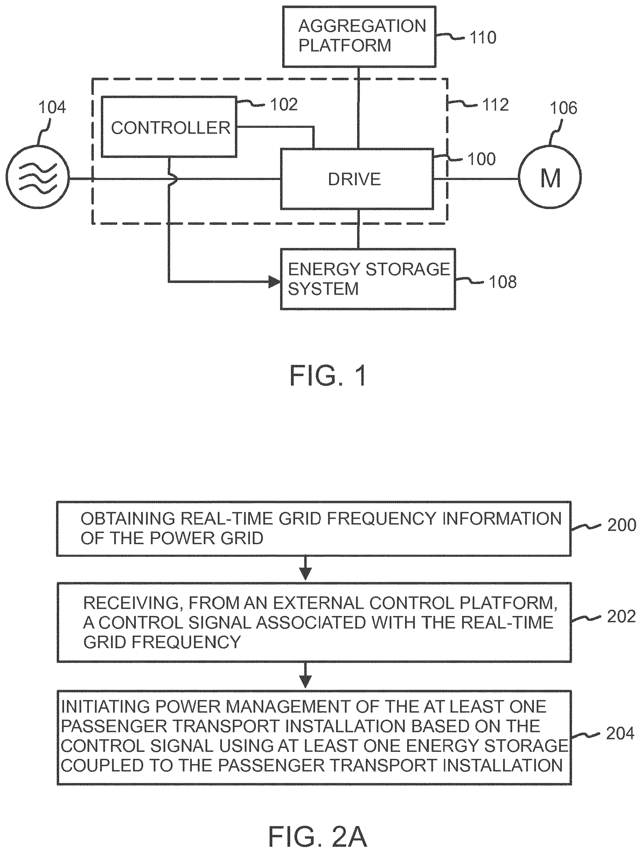

FIG. 1 illustrates a block diagram of a passenger transport system comprising at least one passenger transport installation of a building according to an aspect. The passenger transport system may comprise a power grid interface 106 configured to provide power to the system or receive power from the system, an energy storage system 108 configured to provide and store energy, and a power load 104. The energy storage system 108 may comprise one or more separate energy storages. The passenger transport system further comprises a controller 102 configured to control the power management of the passenger transport system and a drive 100 configured to operate at least one passenger transport installation, for example, an elevator, an escalator or a conveyer.

In an embodiment, the drive 100 is configured to measure the real-time grid frequency of the power grid. Alternately, the measurement of the real-time grid frequency may be implemented in another element of the passenger transport system. The drive 100 is coupled to the grid 106, the energy storage system 108, the controller 102 and the power load 104. Power may be supplied via the drive 100 from the grid 106 to the power load 104 and to the energy storage system 108, as well as from the energy storage system 108 to the power load 104 and to the power grid 106. A control request associated with the real-time grid frequency may be received from an external control platform 110, and power management of the passenger transport system may be initiated based on the control request using the energy storage system 108.

Although FIG. 1 illustrates that the drive 100 and the controller 102 can be implemented as separate elements, in another embodiment, the controller 102 may be integrated with the drive 100 to form a drive unit 112.

In an embodiment of FIG. 1, the elevator system is a multicar elevator system with two or more self-propelled elevator cars moving in the same shaft. Each car has a battery for providing electric power to drive the car and/or to provide electricity to the car electrification. In the shaft side there is provided a battery loading station, which charges each car battery when the car is positioned in a charging position near the loading station. The loading station may comprise the energy storage as disclosed in the independent claims. This means that the energy storage system is charged from the mains electricity network, and is used as an energy buffer to rapidly charge the car batteries with high current.

The solution of FIG. 1 is able to respond to the fluctuations in the power grid frequency very fast, having a second-level response time. Thus, it may be a valuable asset providing grid balancing services for grid operators. In addition, reduced peak power demand may result in lower capacity requirements for building power distribution system, reduced demand charges, and bringing down the costs of feeder cables, transformers, UPS, and back-up power generators. The energy storage system 108 may further reduce the need for additional rescue devices, because it could maintain service during loss of primary power supply.

FIG. 2A illustrates a flow diagram of a method for implementing power management of a passenger transport system comprising at least one passenger transport installation of a building according to an aspect.

At 200 real-time grid frequency information of the power grid is received. The frequency may be measured, for example, by a drive 100 or by another element of the passenger transport system. The drive 100 may also send the measured real-time grid frequency information to the controller 102 for further use.

The grid frequency of the power grid should remain at its nominal frequency at all times. For example, in Europe the nominal frequency is 50 Hz and 60 Hz in the US. When the supply and demand of electricity are not in balance, the grid frequency starts to drift. Usually the frequency is constantly fluctuating in the vicinity of the nominal value, and therefore balancing actions are continuously needed in order to keep the frequency between certain tolerances.

At 202 a control request associated with the real-time grid frequency is received from an external control platform. The control request may comprise a request to decrease/increase power consumption or to decrease/increase power production in order to balance the energy demand and production in the power grid. The external control platform may have sent the control request in response to information obtained from, for example, electricity markets.

At 204 power management of the passenger transport system is initiated using at least one energy storage coupled to the passenger transport installation based on the control request. The power management is therefore implemented by utilizing an already existing energy storage of the passenger transportation installation.

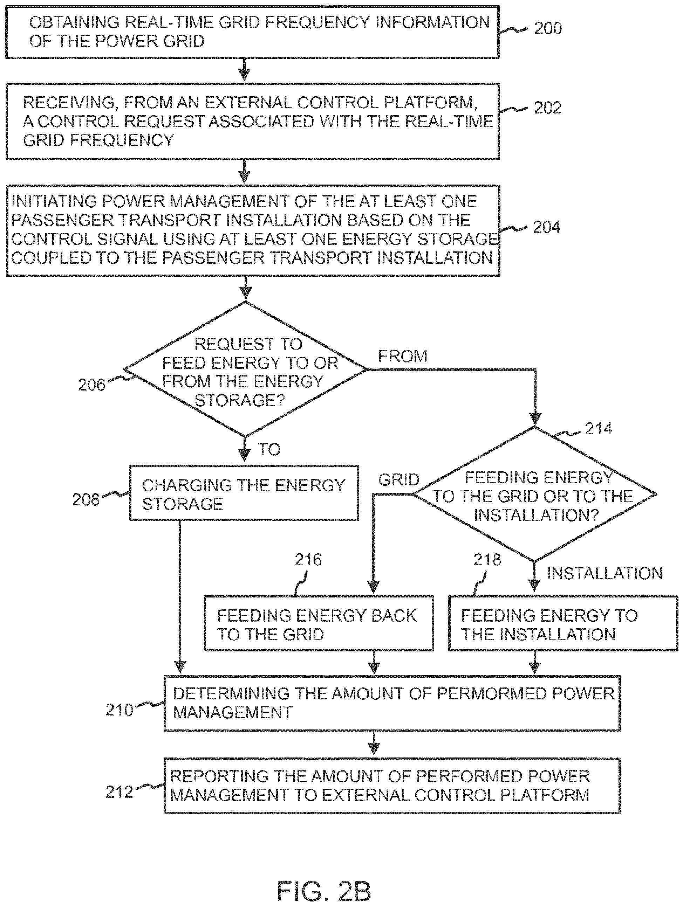

FIG. 2B illustrates a flow diagram of a method for implementing power management of a passenger transport system comprising at least one passenger transport installation of a building according to another aspect.

The steps 200, 202 and 204 have already been discussed above in relation to FIG. 2A, and therefore they are not repeated here.

At 206 it is determined whether the control request relates to a request to feed energy to or from the energy storage. If the request indicates that energy is to be fed to the energy storage, the at least one energy storage is charged with energy provided from the power grid. Alternatively, if the request indicates that energy is to be fed from the energy storage, the processing proceeds to 214. At 214 it is determined whether energy is to be fed to the power grid or to the passenger transport installation from the at least one energy storage. If the energy stored in the at least one energy storage is to be used in feeding the power grid, energy is fed back to the power grid at 216. Alternatively, if the energy stored in the at least one energy storage is to be used in feeding the passenger transport installation, energy is fed to the passenger transport installation at 218.

In an embodiment, the amount of performed power management is determined at 210, and the amount of performed power management is reported to the external control platform at 212. The report may be sent to the external control platform in regular intervals. The regular interval may be, for example, a minute, several minutes or even hours, or any other predetermined time interval. The external control platform may then gather the data from multiple sources and aggregate them as a larger resource, thus enabling them to have a greater impact to the grid, and implementing frequency regulation more effectively. A fleet of frequency-controlled energy storage systems may therefore comprise an so-called aggregator combining small-scale consumption and production into a large entity, which can participate in different demand response markets. By combining the systems into a larger resource, they have larger impact on balancing the grid frequency.

In an embodiment, the control request may comprise a grid frequency threshold, and the power management is initiated by feeding energy from the energy storage when the real-time grid frequency falls below the grid frequency threshold. The grid frequency threshold may be expressed, for example, as a percentage from the nominal value or as a difference in value from the nominal value.

In an embodiment, the control request comprises a grid frequency threshold, wherein the method further comprises initiating charging of the energy storage from the power grid when the real-time grid frequency exceeds the grid frequency threshold. The grid frequency threshold may be expressed, for example, as a percentage from the nominal value or as a difference in value from the nominal value.

In an embodiment, the control request may comprise a request to feed energy from the energy storage when the real-time grid frequency measurement indicates that the grid frequency is below the nominal value, or to charge the energy storage when the real-time grid frequency measurement indicates that the grid frequency is above the nominal value.

When the real-time grid frequency is below the nominal value or below the grid frequency threshold, initiating the power management may comprise feeding energy from the energy storage to support the power demanded by the passenger transport installation in order to decrease power consumption from the grid. When the power demand of the passenger transport installation is lower than what the at least one energy storage could feed, at least some of the energy may be fed back to the power grid.

The grid frequency threshold may be determined, for example, according to the control request or instructions from the grid operator. Further, there may be a plurality of grid frequency thresholds to gradually effect to what extent energy is fed to the power grid from the at least one energy storage or taken from the power grid to the at least one energy storage.

When the real-time grid frequency is above the nominal value or exceeds the grid frequency threshold, initiating power management may comprise charging the energy storage from the power grid.

When the real time grid frequency is at the nominal value, initiating the power management may comprise feeding power from the energy storage to the passenger transport installation to provide support during peaks of the power demand. Mitigating the demand peaks helps to maintain the grid frequency in balance.

The energy storage may also be charged at any time when regenerated energy is available. For example, when an elevator car goes up with an empty elevator car and comes back down with heavy load, the elevator system generates more power than it uses. This regenerated energy may be used to charge the energy storage system, thus also ensuring available reserve for demand response. These kind of occasions may be forecasted and control the use of the energy storage system to prepare for the charging by emptying its energy to support load power before the regeneration.

The solutions illustrated in FIGS. 2A and 2B enable responding to the fluctuations in the power grid frequency very fast, having a second-level response time. Thus, it may be a valuable asset providing grid balancing services for grid operators. In addition, reduced peak power demand may result in lower capacity requirements for building power distribution system, reduced demand charges, and bringing down the costs of feeder cables, transformers, UPS, and back-up power generators. The energy storage system may further reduce the need for additional rescue devices, because it could maintain service during loss of primary power supply.

The disclosed solution provides the ability to provide high value grid services via frequency regulation. Further, the disclosed solution may enable reduced infrastructure costs for building electrical systems, minimizing demand charges and shifting demand to low-price hours.

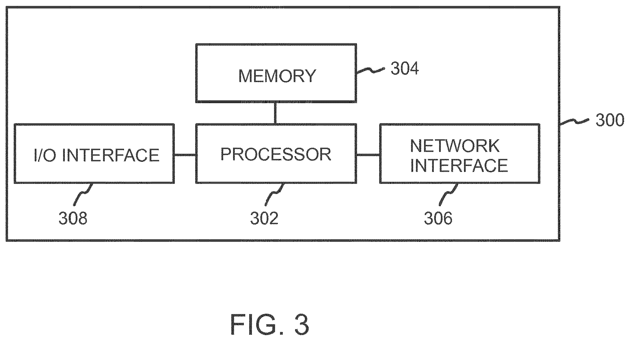

FIG. 3 illustrates a system diagram depicting an apparatus 300 including a variety of optional hardware and software components. The illustrated apparatus 300 can include a controller or processor 302 (e.g., signal processor, microprocessor, ASIC, or other control and processing logic circuitry) for performing such tasks as signal coding, data processing, input/output processing, power control, and/or other functions. The illustrated apparatus 300 can include a memory or memories 304. The memory 304 can include non-removable memory and/or removable memory. The non-removable memory can include RAM, ROM, flash memory, a hard disk, or other well-known memory storage technologies. The memory 304 may also be used for storing data and/or code for running one or more applications.

The apparatus 300 may comprise an input/output interface 308 to enable the apparatus 300 to communicate with other apparatuses. The apparatus 300 may further comprise a network interface 306 that enabling communication with external devices or networks. The network interface 306 may include a wired or wireless transceiver for communicating with the external devices or networks. The illustrated components of the apparatus 300 are all-inclusive, as any components can deleted and other components can be added.

The memory 304 may comprise a computer program that, when executed by the processor 302, causes the apparatus 300 to obtain real-time grid frequency information of the power grid; receive, from an external control platform, a control request associated with the real-time grid frequency; and initiate power management of the passenger transport system based on the control request using at least one energy storage coupled to the passenger transport installation.

Further, any combination of the illustrated components disclosed in FIG. 3, for example, at least one of the processor 302 and the memory 304 may constitute means for obtaining real-time grid frequency information of the power grid; means for receiving, from an external control platform, a control request signal associated with the real-time grid frequency; and means for initiating power management of the passenger transport system based on the control request signal using at least one energy storage coupled to the passenger transport installation.

Example embodiments may be implemented in software, hardware, application logic or a combination of software, hardware and application logic. The example embodiments can store information relating to various methods described herein. This information can be stored in one or more memories, such as a hard disk, optical disk, magneto-optical disk, RAM, and the like. One or more databases can store the information used to implement the example embodiments. The databases can be organized using data structures (e.g., records, tables, arrays, fields, graphs, trees, lists, and the like) included in one or more memories or storage devices listed herein. The methods described with respect to the example embodiments can include appropriate data structures for storing data collected and/or generated by the methods of the devices and subsystems of the example embodiments in one or more databases.

All or a portion of the example embodiments can be conveniently implemented using one or more general purpose processors, microprocessors, digital signal processors, micro-controllers, and the like, programmed according to the teachings of the example embodiments, as will be appreciated by those skilled in the computer and/or software art(s). Appropriate software can be readily prepared by programmers of ordinary skill based on the teachings of the example embodiments, as will be appreciated by those skilled in the software art. In addition, the example embodiments can be implemented by the preparation of application-specific integrated circuits or by interconnecting an appropriate network of conventional component circuits, as will be appreciated by those skilled in the electrical art(s). Thus, the examples are not limited to any specific combination of hardware and/or software. Stored on any one or on a combination of computer readable media, the examples can include software for controlling the components of the example embodiments, for driving the components of the example embodiments, for enabling the components of the example embodiments to interact with a human user, and the like. Such computer readable media further can include a computer program for performing all or a portion (if processing is distributed) of the processing performed in implementing the example embodiments. Computer code devices of the examples may include any suitable interpretable or executable code mechanism, including but not limited to scripts, interpretable programs, dynamic link libraries (DLLs), Java classes and applets, complete executable programs, and the like. In the context of this document, a "computer-readable medium" may be any media or means that can contain, store, communicate, propagate or transport the instructions for use by or in connection with an instruction execution system, apparatus, or device, such as a computer. A computer-readable medium may include a computer-readable storage medium that may be any media or means that can contain or store the instructions for use by or in connection with an instruction execution system, apparatus, or device, such as a computer. A computer readable medium can include any suitable medium that participates in providing instructions to a processor for execution. Such a medium can take many forms, including but not limited to, nonvolatile media, volatile media, transmission media, and the like.

While there have been shown and described and pointed out fundamental novel features as applied to preferred embodiments thereof, it will be understood that various omissions and substitutions and changes in the form and details of the devices and methods described may be made by those skilled in the art without departing from the scope of the claims. For example, it is expressly intended that all combinations of those elements and/or method steps which perform substantially the same function in substantially the same way to achieve the same results are within the scope of the claims.

In view of the foregoing description it will be evident to a person skilled in the art that various modifications may be made within the scope of the claims.

## Claims

1. A method for implementing power management of a passenger transport system comprising at least one passenger transport installation of a building, the method comprising:
obtaining real-time grid frequency information of the power grid;
receiving, from an external control platform (110), a control request associated with the real-time grid frequency;
initiating power management of the passenger transport system based on the control request using at least one energy storage (108) coupled to the least one passenger transport installation;
**characterized in that** the control request comprises a plurality of grid frequency thresholds and the method further comprises:
gradually effecting, based on the plurality of grid frequency thresholds, to what extent energy is fed to the power grid from the energy storage or taken from the power grid to the energy storage.

2. The method of claim 1, wherein the control request comprises a grid frequency threshold, wherein the method further comprises initiating feeding energy from the at least one energy storage (108) when the real-time grid frequency falls below the grid frequency threshold.

3. The method of claim 2, wherein the method further comprises feeding energy from the at least one energy storage (108) back to the grid.

4. The method of claim 2, wherein the method further comprises feeding energy from the at least one energy storage (108) to the at least one passenger transport installation.

5. The method of claim 1, wherein the control request comprises a grid frequency threshold, wherein the method further comprises initiating charging of the at least one energy storage (108) from the power grid when the real-time grid frequency exceeds the grid frequency threshold.

6. The method of claim 1, wherein the control request comprises a request to feed power from the energy storage (108) to the at least one passenger transport installation.

7. The method of any of claims 1 - 6, further comprising:
determining the amount of power management performed in response to initiating the power management based on the control request; and
reporting the amount of power management performed to the external control platform.

8. An apparatus (300) for implementing power management of a passenger transport system comprising at least one passenger transport installation of a building, the apparatus comprising:
means for obtaining (302, 304) real-time grid frequency information of the power grid;
means for receiving (302, 304), from an external control platform, a control request associated with the real-time grid frequency;
means for initiating (302, 304) power management of the passenger transport system based on the control request using at least one energy storage (108) coupled to the least one passenger transport installation;
**characterized in that** the control request comprises a plurality of grid frequency thresholds and the apparatus further comprises:
means for gradually effecting (302, 304), based on the plurality of grid frequency thresholds, to what extent energy is fed to the power grid from the energy storage or taken from the power grid to the energy storage.

9. The apparatus (300) of claim 8, further comprising means for implementing the method of any of claims 2 - 7.

10. An elevator system comprising:
at least one passenger transport installation;
at least one energy storage (108); and
an apparatus (300) according to any of claims 8 - 9.

11. A computer program comprising program code, which when executed by at least one processor (302) of the apparatus according to claim 8, causes the at least one processor (302) to perform the method of any of claims 1 - 7.

12. A computer readable medium comprising program code, which when executed by at least one processor (302) of the apparatus according to claim 8, causes the at least one processor (302) to perform the method of any of claims 1 - 7.

## Patentansprüche

1. Verfahren zur Implementierung von Leistungsmanagement eines Passagierbeförderungssystem, das mindestens eine Passagierbeförderungsanlage eines Gebäudes umfasst, wobei das Verfahren umfasst:
Erhalten von Echtzeitnetzfrequenzinformationen des Stromnetzes;
Empfangen, von einer externen Steuerungsplattform (110), einer zu der Echtzeit-Netzfrequenz gehörigen Steuerungsanfrage:
Einleiten von Leistungsmanagement des Passagierbeförderungssystems basierend auf der Steuerungsanfrage unter Verwendung mindestens eines Energiespeichers (108), der mit der mindestens einen Passagierbeförderungsanlage gekoppelt ist;
**dadurch gekennzeichnet, dass** die Steuerungsanfrage eine Mehrzahl von Netzfrequenzschwellenwerten umfasst und das Verfahren ferner umfasst:
graduelles Bewirken, basierend auf der Mehrzahl von Netzfrequenzschwellenwerten, in welchem Ausmaß Energie in das Stromnetz aus dem Energiespeicher eingespeist oder aus dem Stromnetz in den Energiespeicher entnommen wird.

2. Verfahren nach Anspruch 1, wobei die Steuerungsanfrage einen Netzfrequenzschwellenwert umfasst, wobei das Verfahren ferner das Einleiten des Einspeisens von Energie aus dem mindestens einen Energiespeicher (108) umfasst, wenn die Echtzeitnetzfrequenz unter den Netzfrequenzschwellenwert fällt.

3. Verfahren nach Anspruch 2, wobei das Verfahren ferner das Einspeisen von Energie aus dem mindestens einen Energiespeicher (108) zurück in das Netz umfasst.

4. Verfahren nach Anspruch 2, wobei das Verfahren ferner das Einspeisen von Energie aus dem mindestens einen Energiespeicher (108) in die mindestens eine Passagierbeförderungsanlage umfasst.

5. Verfahren nach Anspruch 1, wobei die Steuerungsanfrage einen Netzfrequenzschwellenwert umfasst, wobei das Verfahren ferner das Einleiten des Ladens des mindestens einen Energiespeichers (108) aus dem Stromnetz umfasst, wenn die Echtzeitnetzfrequenz den Netzfrequenzschwellenwert überschreitet.

6. Verfahren nach Anspruch 1, wobei die Steuerungsanfrage eine Anfrage zum Einspeisen von Leistung aus dem Energiespeicher (108) in die mindestens eine Passagierbeförderungsanlage umfasst.

7. Verfahren nach einem der Ansprüche 1 bis 6, ferner umfassend:
Bestimmen des Umfangs von Leistungsmanagement, das als Antwort auf das Einleiten des Leistungsmanagements basierend auf der Steuerungsanfrage durchgeführt wird; und
Melden des Umfangs des durchgeführten Leistungsmanagements an die externe Steuerungsplattform.

8. Vorrichtung (300) zur Implementierung von Leistungsmanagement eines Passagierbeförderungssystems, das mindestens eine Passagierbeförderungsanlage eines Gebäudes umfasst, wobei die Vorrichtung umfasst:
Mittel zum Erhalten (302, 304) von Echtzeitnetzfrequenzinformationen des Stromnetzes;
Mittel zum Empfangen (302, 304), von einer externen Steuerungsplattform, einer zu der Echtzeitnetzfrequenz gehörigen Steuerungsanfrage;
Mittel zum Einleiten (302, 304) von Leistungsmanagement des Passagierbeförderungssystems basierend auf der Steuerungsanfrage unter Verwendung mindestens eines Energiespeichers (108), der mit der mindestens einen Passagierbeförderungsanlage gekoppelt ist;
**dadurch gekennzeichnet, dass** die Steuerungsanfrage eine Mehrzahl von Netzfrequenzschwellenwerten umfasst und die Vorrichtung ferner umfasst:
Mittel zum graduellen Bewirken (302, 304), basierend auf der Mehrzahl von Netzfrequenzschwellenwerten, in welchem Ausmaß Energie in das Stromnetz aus dem Energiespeicher eingespeist oder aus dem Stromnetz in den Energiespeicher entnommen wird.

9. Vorrichtung (300) nach Anspruch 8, ferner umfassend Mittel zur Implementierung des Verfahrens nach einem der Ansprüche 2 bis 7.

10. Aufzugssystem, umfassend:
mindestens eine Passagierbeförderungsanlage;
mindestens einen Energiespeicher (108); und
eine Vorrichtung (300) nach einem der Ansprüche 8 bis 9.

11. Computerprogramm umfassend Programmcode, der bei Ausführen durch mindestens einen Prozessor (302) der Vorrichtung nach Anspruch 8 den mindestens einen Prozessor (302) veranlasst, das Verfahren nach einem der Ansprüche 1 bis 7 durchzuführen.

12. Computerlesbares Medium umfassend Programmcode, der bei Ausführen durch mindestens einen Prozessor (302) der Vorrichtung nach Anspruch 8 den mindestens einen Prozessor (302) dazu veranlasst, das Verfahren nach einem der Ansprüche 1 bis 7 durchzuführen.

## Revendications

1. Procédé de mise en œuvre de gestion d'alimentation d'un système de transport de passagers comprenant au moins une installation de transport de passagers d'un bâtiment, le procédé comprenant :
l'obtention d'informations de fréquence de réseau en temps réel du réseau électrique ;
la réception, d'une plate-forme de commande externe (110), d'une demande de commande associée à la fréquence de réseau en temps réel ;
l'initiation de la gestion d'alimentation du système de transport de passagers sur la base de la demande de commande en utilisant au moins un accumulateur d'énergie (108) couplé à l'au moins une installation de transport de passagers ;
**caractérisé en ce que** la demande de commande comprend une pluralité de seuils de fréquence de réseau et le procédé comprend en outre :
le fait d'effectuer progressivement, sur la base de la pluralité de seuils de fréquence de réseau, selon le besoin, l'alimentation en énergie du réseau électrique depuis l'accumulateur d'énergie ou le prélèvement d'énergie du réseau électrique vers l'accumulateur d'énergie.

2. Procédé selon la revendication 1, dans lequel la demande de commande comprend un seuil de fréquence de réseau, dans lequel le procédé comprend en outre l'initiation d'alimentation en énergie depuis l'au moins un accumulateur d'énergie (108) lorsque la fréquence de réseau en temps réel tombe en dessous du seuil de fréquence de réseau.

3. Procédé selon la revendication 2, dans lequel le procédé comprend en outre d'alimentation en énergie du réseau à nouveau à partir de l'au moins un accumulateur d'énergie (108).

4. Procédé selon la revendication 2, dans lequel le procédé comprend en outre d'alimentation en énergie de l'au moins une installation de transport de passagers à partir de l'au moins un accumulateur d'énergie (108).

5. Procédé selon la revendication 1, dans lequel la demande de commande comprend un seuil de fréquence de réseau, dans lequel le procédé comprend en outre l'initiation de la charge de l'au moins un accumulateur d'énergie (108) à partir du réseau électrique lorsque la fréquence de réseau en temps réel dépasse le seuil de fréquence de réseau.

6. Procédé selon la revendication 1, dans lequel la demande de commande comprend une demande d'alimentation électrique de l'au moins une installation de transport de passagers à partir de l'accumulateur d'énergie (108) à.

7. Procédé selon l'une des revendications 1 à 6, comprenant en outre :
la détermination de la quantité de gestion d'alimentation effectuée en réponse à l'initiation de la gestion d'alimentation sur la base de la demande de commande ; et
le communication de la quantité de gestion d'alimentation effectuée à la plate-forme de commande externe.

8. Appareil (300) de mise en oeuvre de gestion d'alimentation d'un système de transport de passagers comprenant au moins une installation de transport de passagers d'un bâtiment, l'appareil comprenant :
un moyen d'obtention (302, 304) d'informations de fréquence de réseau en temps réel du réseau électrique ;
un moyen de réception (302, 304), d'une plate-forme de commande externe, d'une demande de commande associée à la fréquence de réseau en temps réel ;
un moyen d'initiation (302, 304) de la gestion d'alimentation du système de transport de passagers sur la base de la demande de commande en utilisant au moins un accumulateur d'énergie (108) couplé à l'au moins une installation de transport de passagers ;
**caractérisé en ce que** la demande de commande comprend une pluralité de seuils de fréquence de réseau et l'appareil comprend en outre :
un moyen pour effectuer progressivement (302, 304), sur la base de la pluralité de seuils de fréquence de réseau, selon le besoin, l'alimentation en énergie du réseau électrique depuis l'accumulateur d'énergie ou le prélèvement d'énergie du réseau électrique vers l'accumulateur d'énergie.

9. Appareil (300) selon la revendication 8, comprenant en outre un moyen de mise en oeuvre du procédé de l'une des revendications 2 à 7.

10. Système d'ascenseur comprenant :
au moins une installation de transport de passagers ;
au moins un accumulateur d'énergie (108) ; et
un appareil (300) selon l'une des revendications 8 et 9.

11. Programme informatique comprenant un code de programme qui, lorsqu'il est exécuté par au moins un processeur (302) de l'appareil selon la revendication 8, amène l'au moins un processeur (302) à exécuter le procédé selon l'une des revendications 1 à 7.

12. Support lisible par ordinateur comprenant un code de programme qui, lorsqu'il est exécuté par au moins un processeur (302) de l'appareil selon la revendication 8, amène l'au moins un processeur (302) à exécuter le procédé selon l'une des revendications 1 à 7.
